Europäisches Patentamt

European Patent Office

Office européen des brevets

(19)

(11) Veröffentlichungsnummer: **0 259 578**
**B1**

(12) **EUROPÄISCHE PATENTSCHRIFT**

(45) Veröffentlichungstag der Patentschrift:
06.06.90

(51) Int. Cl.5: **A47J 27/09**

(21) Anmeldenummer: 87110440.2

(22) Anmeldetag: 18.07.87

(54) Deckel mit Kochventil für einen Dampfdruckkochtopf.

(30) Priorität: 09.09.86 DE 3630584

(43) Veröffentlichungstag der Anmeldung:
16.03.88 Patentblatt 88/11

(45) Bekanntmachung des Hinweises auf die Patenterteilung:
06.06.90 Patentblatt 90/23

(84) Benannte Vertragsstaaten:
AT BE CH DE ES FR GB GR IT LI LU NL

(56) Entgegenhaltungen:
DE-A- 2 510 808
DE-A- 2 834 397
FR-A- 1 035 787
GB-A- 742 451
GB-A- 834 003
US-A- 3 844 206

(73) Patentinhaber: FISSLER GMBH, Im
Wörth 2 Postfach 12 23 20, D-6580 Idar-Oberstein 2(DE)

(72) Erfinder: Niese, Karl c/o Patentanwälte, KEIL &
SCHAAFHAUSEN Ammelburgstrasse 34,
D-6000 Frankfurt am Main 1(DE)
Erfinder: Thelen, Arno c/o Patentanwälte, KEIL &
SCHAAFHAUSEN Ammelburgstrasse 34,
D-6000 Frankfurt am Main 1(DE)

(74) Vertreter: Keil, Rainer A., Dipl.-Phys. Dr. et al, KEIL &
SCHAAFHAUSEN Patentanwälte Eysseneckstrasse 31,
D-6000 Frankfurt am Main 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Deckel mit Kochventil für einen Dampfdruckkochtopf, mit einem sich durch eine der Druckentlastung dienenden Öffnung der Deckelwandung erstreckenden Ventilkörper, welcher in Schließstellung unter der Wirkung einer sich deckelseitig an einem Federteller und andererseits an einer mit dem Ventilkörper lösbar verbundenen, topfartig hochgezogene Wandungen aufweisenden Federaufnahme abstützenden Ventilfeder von außen an einen am Rand der Deckelöffnung oder mittels eines in die Deckelöffnung eingesetzten Dichtkörpers gebildeten Dichtsitz gedrückt wird, von welchem sich der Ventilkörper bei Überschreiten eines vorgegebenen Topfinnendrucks zur Freigabe eines Dampfaustrittskanals der Deckelöffnung abhebt.

Aus der FR-A-1 035 787 ist ein Deckel mit Kochventil für einen Dampfdruckkochtopf mit einem Ventilkörper bekannt, welcher sich durch eine der Druckentlastung dienenden Öffnung der Deckelwandung erstreckt. Der Ventilkörper wird in Schließstellung unter der Wirkung einer Ventilfeder von außen an einen Dichtsitz gedrückt. Die Ventilfeder stützt sich deckelseitig an einem Federteller und andererseits an einer Federaufnahme ab. Der Dichtsitz ist am Rand der Deckelöffnung oder mittels eines in die Deckelöffnung eingesetzten Dichtkörpers gebildet. Die Federaufnahme ist mit dem Ventilkörper lösbar verbunden und weist topfartig hochgezogene Wandungen auf. Der Ventilkörper hebt sich bei Überschreiten eines vorgegebenen Topfinnendruckes zur Freigabe eines Dampfaustrittskanals der Deckelöffnung ab.

Allerdings liegt der Ventilteller bei dieser Kochventilanordnung fest, da er mit dem Dichtkörper verschraubt ist, um diesen an der Deckelwandung zu halten. Hierzu ist jedoch eine besondere Gewindeverbindung erforderlich, was zur Folge hat, daß für die genaue Winkellage des Ventilkörpers die Position der Federaufnahme verantwortlich ist, welche jedoch mit dem Ventilkörper seitlich ausweichen kann, da sie nur von der Ventilfeder gehalten, seitlich jedoch nicht geführt ist. Desweiteren stellen Federteller und Federaufnahme Bauteile dar, welche gesondert montiert und demontiert werden müssen. Ein weiterer Nachteil der aus der FR-A 035 787 bekannten Kochventilanordnung besteht darin, daß die Deckelöffnung verhältnismäßig offen liegt, so daß die in dem Kochtopf vorhandenen Speisen leicht in den Bereich des Dichtsitzes gelangen können, was die Funktionsfähigkeit des Kochventils beeinträchtigt.

In der GB-A 742 451 ist ein Deckel mit Kochventil für einen Dampfdruckkochtopf beschrieben, bei dem sich der Ventilkörper ebenfalls durch die Deckelwandung erstreckt. Die hierfür erforderliche Öffnung dient jedoch nicht der Druckentlastung, sondern der Führung des Ventilkörpers, was einen entsprechenden Herstellungsaufwand verlangt. Der Druckentlastung dienen dagegen gesonderte, im radialen Abstand von der Ventilkörperöffnung in der Deckelwandung vorgesehene Öffnungen, welche von einem entsprechend großen Ventilkörperkragen überdeckt sind, welcher an seinem Außenumfang mit einem in der Oberseite der Deckelwandung eingelassenen Dichtring zusammenwirkt. Die Ventilfeder ist hier als Tellerfederpaket ausgebildet, welche sich einerseits auf der Innenfläche der Deckelwandung und andererseits auf einer auf das innere Ende des Ventilkörpers aufgeschraubte Mutter abstützt. Damit bilden bei Montage und Demontage das Ventilfederpaket und die Abstützmutter gesondert zu handhabende Bauteile, welche auch für sich verloren gehen können, was zu dem verhältnismäßig aufwendigen Konstruktionsaufwand einen weiteren Nachteil darstellt.

In der GB-A 834 003 ist ein Deckel mit Kochventil für einen Dampfdruckkochtopf beschrieben, bei welchem sich die Ventilfeder unmittelbar auf der Innenseite der Deckelwandung abstützt. Ein gesonderter Federteller als Führungselement ist nicht vorhanden. Behälterinnenseitig stützt sich die Ventilfeder auf einem Kragen ab, welcher einteilig mit dem Ventilkörper selbst ausgebildet ist. Dadurch besteht ebenfalls die Gefahr, daß sich der Ventilkörper seitlich aus seiner gewünschten senkrechten Lage bewegt. Die Montage und Demontage des Kochventils ist schwierig, da die Ventilfeder über den unteren Kragen des Ventilkörpers manipuliert werden muß.

Aus der DE-A 2 510 808 ist ein Kochventil bekannt, bei welchem sich die Ventilfeder ebenfalls unmittelbar auf der Innenseite der Deckelwandung abstützt, also kein Federteller vorgesehen ist. Die Federaufnahme hat zwar topfartig hochgezogene Wandungen, diese enden jedoch im Abstand unterhalb der Deckelwandung, so daß auch hier die im Kochtopf enthaltenen Speisen unmittelbar in den Bereich des Dichtsitzes gelangen können.

Insbesondere findet aber keine gegenseitige Führung eines Federtellers und der Federaufnahme statt und es ist auch kein Federteller unter Einschluß der Ventilfeder zur Schaffung einer Baueinheit mit unverlierbaren Teilen in der Federaufnahme eingefangen. Beim Lösen der auf das untere Teil des Ventilkörpers aufgeschraubten Federaufnahme kann die Ventilfeder wegspringen, was die Montage erschwert. Auch bei der Montage sind Feder und Federaufnahme als gesonderte Bauteile zu handhaben. An einer zuverlässigen Zentrierung des Ventilkörpers fehlt es gänzlich.

Aus der DE-A 3 200 905 ist ein Deckel mit Kochventil bekannt, der aus einem auf der Oberseite der Deckelwandung aufsitzenden Ventilkappe besteht, die mit einem Gewindeabschnitt durch eine Deckelöffnung hindurchgreift und mit Hilfe eines dort aufgeschraubten Sicherungskörpers unter Zwischenlage von Dichtungsringen an der Topfwandung festgelegt ist. Im Inneren des Kochventiles wird von einer Ventilfeder ein Ventilkörper gegen einen Dichtsitz gedrückt, von welchem er sich bei Überschreiten eines vorgegebenen Topfinnendruckes gegen die Kraft der Ventilfeder abheben kann, so daß Dampfaustrittskanäle des Sicherungskörpers und der Ventilkappe über die Innenkammer des Ventils in Strömungsverbindung treten und ein Druckausgleich erfolgen kann. In dem Ventilkörper ist ein Anzeigestift axial geführt, der sich über eine Anzeigefeder, die zwischen einer Schulter des Anzeigestiftes und einer horizontalen Fläche der Ventilkappe angeordnet ist, gegen die Ventilkappe derart abstützt, daß sich der Anzeigestift durch den Innendruck im Topf und in Abhängigkeit von diesem Innendruck aus einer Ruhelage gegen die Kraft der Anzeigefeder nach oben axial verschieben kann. In der Ruhelage fluchet die Stirnfläche des Anzeigestiftes mit der benachbarten Oberfläche der Ventilkappe. Bei dem bekannten Kochventil ist der Strö-mungsquerschnitt der Dampfaustrittskanäle not-wendigerweise verhältnismäßig gering, was zu verhältnismäßig großen Abdampfgeräuschen führt. Die Ventilkappe und der Sicherungskörper sind bei dem bekannten Kochventil so bemessen, daß sie mit der Hand ergriffen und miteinander verschraubt bzw. von Hand wieder voneinander gelöst werden können. Dies setzt jedoch eine Mindestgröße von Ventilkappe und Sicherungskörper voraus. Dadurch hat das bekannte Kochventil eine verhältnismäßig große Bauhöhe und ragt insbesondere weit über die Oberfläche der Deckelwandung hinaus, wodurch der Deckel ein "technisches" Aussehen erhält, was manche Hausfrau von der Benutzung abhält.

Aufgabe der vorliegenden Erfindung ist es daher, einen Deckel mit Kochventil der gattungsgemäßen Art so auszubilden, daß bei Verwendung einfacher Teile und leichter Montage und Demontage eine zuverlässigere Funktion des Kochventils erzielt wird. Außerdem soll das Kochventil eine geringe Bauhöhe haben und insbesondere nur wenig über die Oberseite der Deckelwandung hinausragen.

Diese Aufgabe wird mit der Erfindung im wesentlichen dadurch gelöst, daß der Federteller axial verschiebar in der Federaufnahme aufgenommen, an dessen Wandung geführt und durch einen von der Wand und radial einwärts ragenden Scheibenkörper eingefangen ist. Auf diese Weise ist die Ventilfeder praktisch vollständig eingekapselt. Das Zusammendrücken und Strecken der Ventilfeder ist dadurch gewährleistet, daß der Federteller axial in der Federaufnahme verschiebbar und an dessen hochgezogener Wandung geführt ist. Bei der Demontage und Montage des Kochventils durch den Benutzer zum Zwecke der Reinigung kann die Ven-tilfeder dadurch nicht wegspringen, Federaufnah-me, Ventilfeder und Federteller bilden eine gemeinsam handhabbare Einheit.

Eine verhältnismäßig weit über die Deckelwandung hinausragende Ventilkappe ist ganz entbehrlich. Dennoch werden sämtliche Funktionen des bekannten Kochventils bei einfacher Montage erfüllt, denn der Ventilkörper braucht, evtl. nach dem Einsetzen oder Einknöpfen der Ventilsitzdichtung, lediglich durch die Deckelöffnung hindurchgesteckt und von der Deckelinnenseite her an dem Deckel unter Abstützung gegen die Ventilfeder arretiert zu werden. Ebenso einfach ist die Demontage, was gewährleistet, daß die beim Kochen evtl. mit dem Topfinhalt in Berührung kommenden Ventilbereiche leicht gereinigt werden können.

Damit die Ventilfeder nicht nur den erforderlichen Spannungszustand für die axiale Verschiebung des Ventilkörpers erhält, sondern auch der Ventilkörper an der Deckelwandung gehalten wird, stützt sich der Federteller in Betriebsstellung an der Innenfläche des Randes der Deckelöffnung bzw. an der in die Deckelöffnung eingesetzten oder eingeknöpften Ventilsitzdichtung ab. Hierbei hat die Ventilsitzdichtung vorteilhafterweise eine Zentrierstufe für die Aufnahme einer konzentrischen Ausbuchtung des Federtellers, so daß bei der Montage des Kochventils an die Deckelwandung sowohl Ventilkörper als auch Federaufnahme zwangsläufig einen konzentrisch richtigen Sitz in bezug auf die Deckelöffnung erhalten.

Für die Vereinfachung der Herstellung und Gewährleistung einer sicheren Funktion kann ferner gemäß einem weiteren Erfindungsmerkmal der Ventilkörper ein hülsenförmiges Gehäuse aufweisen und die Wandung des Gehäuses des Ventilkörpers an seinem aus der Deckelöffnung herausragenden Ende nach radial außen zur Bildung der Dichtkante des Ventilkörpers umgebogen sein.

Vorteilhafterweise umgibt der Scheibenkörper den inneren Teil des Dichtkörpers in einer Mittelöffnung. Auf diese Weise wird eine geringe Bauhöhe des Kochventils erzielt, weil der Dichtkörper in das Innere der Federaufnahme hineinragt. Gleichzeitig wird eine gegebenenfalls zusätzliche Führung für die Federaufnahme in der Mittelöffnung an dem Dichtkörper gegeben.

Hierbei ist zweckmäßigerweise vorgesehen, daß der Außendurchmesser des Federtellers größer ist als der Durchmesser der Mittelöffnung des Scheibenkörpers. Hierdurch wird der Federteller in einfacher Weise in der Federaufnahme eingefangen.

Die Deckelöffnung ist in einer Vertiefung der Deckelwandung vorgesehen, wobei die außerhalb der Deckelwandung liegenden Teile des Kochventils kaum oder überhaupt nicht über die Oberseite der angrenzenden Bereiche der Deckelwandung axial hinaus, so daß der Deckel insgesamt, bis auf die Fuge zwischen Ventilkörper und Deckelwandung eine praktisch vorstehende Fläche bilden, was nicht nur zur Formschönheit des Deckels beiträgt, sondern auch dem leichteren abwischen des Deckels im Gegensatz zu der vorbekannten Lösung mit Ventilkappe dient. Hierbei sind also insbesondere der auf der Außenseite der Deckelwandung liegende Teil des Dichtkörpers und des Ventilkörpers in Verschlußstellung innerhalb der Vertiefung geschützt.

Der Ventilkörper trägt auf seinem äußeren Ende einen die Deckelöffnung, den ggf. vorgesehenen Dichtkörper und die Dichtkante des Ventilkörpers radial überkragende Abdeckscheibe. Hierdurch liegen nicht nur die Deckelöffnung, die Ventilsitzdichtung und die Ventilkante des Ventilkörpers geschützt und unsichtbar unter der Abdeckscheibe, diese dient vielmehr auch der Umlenkung des Dampfstromes beim Öffnen des Kochventiles und dem Dampfaustritt durch den ringförmigen Dampfaustrittskanal von axialer in im wesentlichen radiale Richtung. Damit eine geeignete Strömungsrichtung erzielt wird, kann die Vertiefung der Deckelwandung eine entsprechend flache Mulde bilden, aus welcher der Dampf zwischen dem Außenrand der Abdeckscheibe und der Deckelwandung mit einer wesentlichen radialen Komponente austritt. Außerdem wird der Austrittsquerschnitt gegenüber dem inneren ringförmigen Dampfaustrittskanal noch einmal wesentlich vergrößert, so daß der beim Ansprechen des Kochventils austretende Dampf verhältnismäßig geringe Geschwindigkeit hat und die Gefahr, sich an dem Dampf zu verbrennen, weiter verringert ist. Der Durchmesser der Abdeckscheibe braucht dabei nur geringfügig kleiner als der Durchmesser der Vertiefung der Deckelwandung zu sein, um die Vertiefung praktisch vollständig zu überdecken, ohne daß der gewünschte große Ausströmquerschnitt für den Dampf verlorenginge.

Vorteilhafterweise fluchtet die Oberseite der Abdeckscheibe in Verschlußstellung des Ventilkörpers im wesentlichen mit der Oberfläche der Deckelwandung, um den gewünschten Flächeneindruck der Deckeloberseite zu gewährleisten.

Um die Abdeckscheibe in einfacher Weise an den oberen umgebogenen Teil des Gehäuses des Ventilkörpers zu befestigen, ist vorgesehen, diese miteinander zu verschweißen.

Bei einem Deckel mit Kochventil der erfindungsgemäßen Art, bei welchem ein in dem Ventilkörper geführte Anzeigestift, der durch den Topfinnendruck und in Abhängigkeit von der Größe des Topfinnendruckes aus einer Ruhelage gegen die Wirkung einer Anzeigefeder zur Druckanzeige axial verlagert wird, vorgesehen ist, ist in Weiterbildung des Erfindungsgedankens zur Lösung der gestellten Aufgabe vorteilhafterweise der Anzeigestift in dem hülsenförmigen Gehäuse des Ventilkörpers geführt. Weiterhin ist auf dessen topfinnenseitiges durch eine Mittelöffnung der Federaufnahme hindurchragendes Ende eine Dichtungsmembran aufgesteckt oder aufgeknöpft, an welche sich der Anzeigestift mit seinem topfinnenseitigen Ende abstützt. Auf diese Weise wird bei kompakter Bauweise und leichter Montage erreicht, daß im Betrieb von dem Anzeigestift der Topfinnendruck immer zuverlässig angezeigt wird, ohne daß der Anzeigestift selbst mit dem Inhalt des Topfes in Berührung kommt, so daß eine Verschmutzung des Anzeigestiftes und Beeinträchtigung seiner Funktion vermieden ist.

Der Anzeigestift hat bei einer weiteren Ausgestaltung der Erfindung über den größten Teil seiner axialen Länge einen wesentlich geringeren Durchmesser als der Innendurchmesser des Gehäuses des Ventilkörpers und ist mittels eines radialen Flansches an der Innenwandfläche des Gehäuses axial geführt. Hierdurch wird nicht nur das Gewicht des Anzeigestiftes möglichst gering, sondern auch Platz für die Aufnahme der Anzeigefeder, zumindest auf dem oberen Teil des Anzeigestiftes, geschaffen, die dadurch konzentrisch gehalten wird.

Die Anzeigefeder kann sich einerseits an dem radialen Flansch des Anzeigestiftes und andererseits an einem an dem Ventilkörper gehaltenen, vorzugsweise ringförmigen, Führungskörper abstützen.

Der Führungskörper weist vorzugsweise eine Ausnehmung für die konzentrische Aufnahme wenigstens eines Teils der Anzeigefeder auf.

Der Führungskörper kann sich an seinem äußeren Ende mit einer Stufe an der Abdeckscheibe abstützen, mit einem Vorsprung in eine Mittelöffnung der Abdeckscheibe hineinragen und an seiner Oberseite mit der Außenfläche der Abdeckscheibe im wesentlichen fluchten. Hierdurch wird nicht nur eine einfache Montage und Sicherung der konzentrischen Lage des Führungskörpers relativ zu dem Ventilkörper und dem Anzeigestift gesichert, sondern auch erreicht, daß die Oberseite des Kochventils, bis auf die Trennungsfuge, eine durchgehende Fläche darbieten.

Auch die Oberseite des Anzeigestiftes fluchtet in dessen Ruhestellung vorzugsweise mit der Oberseite des Führungskörpers und der Außenfläche der Abdeckscheibe.

Der Führungskörper kann als weiteres die Funktion eines oberen Anschlages für die axiale Bewegung des Anzeigestiftes bilden.

Eine Einziehung des Gehäuses kann einen unteren Anschlag für die axiale Bewegung des Anzeigestiftes bilden, so daß der Anzeigestift insgesamt unverlierbar in dem Gehäuse des Ventilkörpers gehalten ist, auch wenn die z.B. als Rollmembran ausgebildete Dichtungsmembran abgenommen wird, auf welcher sich der Anzeigestift abstützt.

Der Anzeigestift ist vorzugsweise zweiteilig ausgebildet, wobei der untere Teil aus Metall, z.B. Aluminium und der obere, die Druckanzeigemarkierungen tragende Teil aus Kunststoff besteht. Hierdurch hat der Anzeigestift das gewünschte geringe Gewicht und die Druckanzeigemarkierungen können leicht in Form von farbigen Kunststoffflächenbereichen gebildet sein.

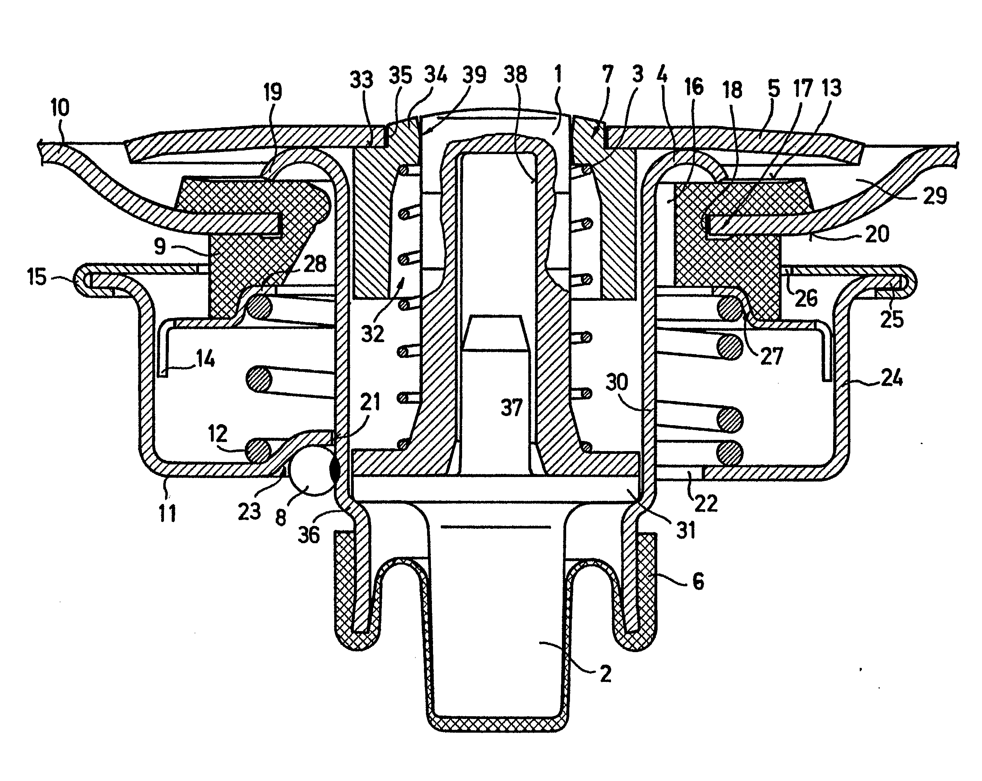

In der nachfolgenden Beschreibung eines Ausführungsbeispieles wird die Erfindung anhand der Zeichnung näher erläutert.

Die einzige Figur veranschaulicht im Querschnitt einen die Erfindung aufweisenden Deckel mit Kochventil.

Das in einer Öffnung 18 der Wandung 10 eines Deckels eines Dampfdruckkochtopfes angeordnete Kochventil hat einen Ventilkörper 4, welcher unter der Wirkung einer Ventilfeder 12 an einen Dichtsitz 13 gedrückt wird, von welchem sich der Ventilkörper 4 bei Überschreiten eines vorgegebenen Topfinnendrucks zur Freigabe eines Dampfaustrittskanals 16 abhebt. Der Dichtsitz 13 ist von einer in die Deckelöffnung 18 eingeknöpften ringförmigen Ventilsitzdichtung 9 aus Gummi gebildet. Der Ventilkörper 4 erstreckt sich unter Freihaltung des ringförmigen Dampfaustrittskanals 16 durch die Deckelöffnung 18 und legt sich in Schließstellung unter der Wirkung der Ventilfeder 12 mit einer Dichtkante 19 von außen gegen den Dichtsitz 13 der Ventilsitzdichtung 9. Die Ventilfeder 12 stützt sich einerseits mittelbar an dem innerhalb der Deckelwandung 10 liegenden Teil der Ventilsitzdichtung 9 und damit an der Deckelwandung 10 und andererseits unmittelbar auf einer Federaufnahme 11 ab, welche lösbar mit dem Ventilkörper 4 verbunden ist. Die Federaufnahme 11 hat zu diesem Zweck eine Mittelöffnung 21, durch welche der Ventilkörper 4 hindurchgeführt ist. Im Randbereich der Mittelöffnung 21 sind in gleichmäßigem Winkelabstand verteilt radiale Ausbuchtungen 22 für den Durchtritt von Arretierungsvorsprüngen 8 des Ventilkörpers 4 sowie jeweils dazwischenliegend axiale Vertiefungen 23 für das Einrasten der Arretierungsvorsprünge 8 nach Drehung der Federaufnahme 11 relativ zu dem Ventilkörper 4 um den erforderlichen Winkel vorgesehen. Die Arretierungsvorsprünge 8 sind in dem dargestellten Fall außen an die Wandungen des als Gehäuse 30 ausgebildeten Ventilkörpers 4 angeschweißte Kugeln. Die Federaufnahme 11 weist topfartig hochgezogene Wandungen 24 auf, über deren freien, nach außen abgewinkelten Rand 25 ein Scheibenkörper 15 aufgebördelt ist. Der Scheibenkörper 15 hat eine Mittelöffnung 26 für den Durchtritt des inneren Teils der Ventilsitzdichtung 9. Die Ventilfeder 12 stützt sich deckelseitig an einem Federteller 14 ab, welcher in der Federaufnahme 11 von den Wandungen 24 axial geführt ist. Der Außendurchmesser des Ventiltellers 14 ist größer als der Durchmesser der Mittelöffnung 26 des Scheibenkörpers 15. Wird also die Federaufnahme 11 nach Drehung von dem Ventilkörper 4 axial abgezogen, so kann die Ventilfeder 12 den Ventilteller 14 nur soweit axial verschieben, bis letzterer an der Innenfläche des Scheibenkörpers 15 anschlägt. Die Einheit von Federaufnahme 11, Ventilfeder 12 und Ventilteller 14 kann somit insgesamt von dem Ventilkörper 4 abgezogen werden, wodurch dieser frei nach oben durch die Mittelöffnung der Ventilsitzdichtung 9 herausgezogen werden kann. Im montierten Zustand drückt die Ventilfeder 12 den Ventilteller 14 mit einer Ausbuchtung 28 an die Ventilsitzdichtung 9 im Bereich einer Zentrierstufe 27 und in die dadurch bedingte Vertiefung der Ventilsitzdichtung 9.

Die Deckelöffnung 18 liegt in einer Vertiefung 29 der Deckelwandung 10. Dadurch können der auf der Außenseite der Deckelwandung 10 liegende Teil der Ventilsitzdichtung 9 und der durch die Deckelöffnung 18 hindurchragende Teil des Ventilkörpers 4 ebenfalls in Verschlußstellung innerhalb der Vertiefung 29 der Deckelwandung 10 liegen. Der Ventilkörper 4 hat ferner an seinem äußeren Ende einen die Deckelöffnung 18, die Ventilsitzdichtung 9 und die Dichtkante 19 des Ventilkörpers 4 radial überkragende Abdeckscheibe 5. Diese ist mit dem nach außen umgebogenen Abschnitt der Wandung des Gehäuses 30 des Ventilkörpers 4 verschweißt, welche auch die Dichtkante 19 bildet. Der Durchmesser der Abdeckscheibe 5 ist nur geringfügig kleiner als der Durchmesser der Vertiefung 29 im Bereich der benachbarten Deckelwandung 10. Die Oberseite der Abdeckscheibe 5 fluchtet in der gezeigten Verschlußstellung des Ventilkörpers 4 im wesentlichen mit der benachbarten Oberfläche der Deckelwandung 10.

In dem Gehäuse 30 des Ventilkörpers 4 ist ein Anzeigestift 1 axial geführt, der durch den Topfinnendruck und in Abhängigkeit der Größe des Topfinnendruckes aus der dargestellten Ruhelage gegen die Wirkung der Anzeigefeder 3 axial verlagert wird. Auf das topfinnenseitige Ende des Gehäuses 30 des Ventilkörpers 4 ist eine als Rollmembran ausgebildete Dichtungsmembran 6 aufgeknüpft, an welcher sich der Anzeigestift 1 mit seinem topfinnenseitigen Ende 2 abstützt. Der Anzeigestift 1 ist über den größten Teil seiner axialen Länge von wesentlich geringerem Durchmesser als der Innendurchmesser des den Ventilkörper 4 bildenden Gehäuses 30, dabei wird der Anzeigestift 1 mittels eines radialen Flansches 31 an der Innenwandfläche des Gehäuses 30 axial geführt. Im dargestellten Fall ist der Anzeigestift 1 zweiteilig ausgebildet; der untere Teil ragt mit einem Zapfen 37 in eine axiale Ausnehmung 38 des oberen Teils des Anzeigestifts 1. Beide Teile haben einen radialen Flansch, welche aneinanderliegend den Flansch 31 bilden. Auf den oberen Teil des Anzeigestiftes 1 ist die Anzeigefeder 3 aufgeschoben, welche sich dadurch topfinnenseitig auf dem Flansch 31 abstützt. Nach oben ragt die Anzeigefeder 3 teilweise in eine Ausnehmung 32 eines Führungskörpers 7 und stützt sich an einer Innenschulter dieses Führungskörpers 7 ab. Der Führungskörper 7 wird mit einer Stufe 33 von der Anzeigefeder gegen die Innenseite der Abdeckscheibe 5 gedrückt und ragt mit einem Vorsprung 34 in eine Mittelöffnung 35 der Abdeckscheibe 5 derart, daß die obere Stirnfläche des Führungskörpers 7 im wesentlichen mit dem angrenzenden Bereich der Oberseite der Abdeckscheibe 5 fluchtet. In Verlängerung der Ausnehmung 32 hat der Führungskörper 7 ferner eine Durchtrittsöffnung 39 für den Anzeigestift 1. In der dargestellten Ruhelage fluchtet die obere Stirnfläche des Anzeigestiftes 1 im wesentlichen mit der benachbarten Stirnfläche des Führungskörpers 7. Der Führungskörper 7 bildet einen oberen Anschlag für die axiale Bewegung des Anzeigestiftes 1. Nach unten ist die axiale Bewegung des Anzeigestiftes 1 durch eine Einziehung 36 der Wandung des Gehäuses 30 des Ventilkörpers 4 begrenzt. Dadurch ist der Anzeigestift 1 mit der Anzeigefeder 3 und dem Führungskörper 7 unverlierbar in dem Ventilkörper 4 gehalten, auch wenn die Dichtungsmembran 6 zum Zwecke der Reinigung des Innenraumes des Ventilkörpers 4 abgenommen wird.

Für den Verbraucher besteht das Kochventil demnach nur aus drei zu handhabenden Teilen: der Ventilsitzdichtung 9, welche in die Deckelöffnung 18 einknöpfbar und aus dieser zum Zwecke des Austauschs auch leicht wieder herausnehmbar ist, da sie aus flexiblem Material, wie Gummi besteht, der Ventilkörpereinheit, bestehend aus Gehäuse 30, Abdeckscheibe 5, Dichtmembran 6 und Führungskörper 7 mit dem darin aufgenommenen Anzeigestift 1 mit Anzeigefeder 3, sowie der Ventilfedereinheit, bestehend aus Ventilaufnahme 11, Ventilfeder 12 und Federteller 14, welche nach dem Hindurchstecken des Ventilkörpers 4 durch die Deckelöffnung 18 auf das Gehäuse 30 aufgedreht und an diesem festgerastet werden kann. Die Membrane 6 ist austauschbar an dem unteren Ende des Gehäuses 30 gehalten.

Damit wird ein unter Ausnutzung der Vertiefung 29 der Deckelwandung 10 praktisch vollständig in den Deckel des Dampfkochtopfes eingesenktes Kochventil kompakter und einfacher Bauweise vorgeschlagen, welches auch für Laien zum Zwecke der Reinigung und Wartung leicht demontiert und wieder montiert werden kann. Diese Vorteile kommen natürlich auch der Erstmontage im Werk zustatten. Von besonderem Vorteil ist der Umstand, daß praktisch der gesamte Öffnungsquerschnitt der Deckelöffnung 18 abzüglich Querschnitt des Ventilkörpers 4 und ggf. Dicke der Ventilsitzdichtung 9 als Dampfaustrittsöffnung genutzt werden kann. Da die Dichtkante 19 radial außerhalb der Deckelöffnung 18 liegt, genügt ein geringfügiges Abheben des Ventilkörpers 4 von dem Dichtsitz 13 der Ventilsitzdichtung 9, um in dem erforderlichen Maße abzudampfen. Der Dampfaustrittsspalt zwischen dem Außenrand der Abdeckscheibe 5 und dem benachbarten Bereich der Deckelwandung 10 liegt nochmals weiter radial außen, wodurch dieser Spalt, obwohl er verhältnismäßig schmal gehalten werden kann, um den optischen Gesamteindruck des Deckeläußeren nicht zu stören, für ein Ausströmen des Dampfes in im wesentlichen radialer Richtung ohne zu hohe Geschwindigkeit gestattet. Dadurch wird die Gefahr für den Benutzer, sich zu verbrennen, verringert. Die im Vergleich zu dem Stand der Technik äußerst flache Bauweise des Kochventils außerhalb der Deckelwandung 10, die zudem noch in die Vertiefung 29 eingesenkt ist, führt nicht nur zu einem verbesserten ästhetischen Eindruck des Deckeläußeren, sondern auch zur Raumersparnis bei der Unterbringung des Deckels im Schrank und zwar unabhängig davon, ob der Deckel auf den Dampfkochtopf aufgesetzt ist oder gesondert horizontal oder vertikal im Geschirrschrank gestapelt wird.

## Patentansprüche

1. Deckel mit Kochventil für einen Dampfdruckkochtopf, mit einem sich durch eine der Druckentlastung dienenden Öffnung (18) der Deckelwandung (10) erstreckenden Ventilkörper (4), welcher in Schließstellung unter der Wirkung einer sich deckelseitig an einem Federteller (14) und andererseits an einer mit dem Ventilkörper (4) lösbar verbundenen, topfartig hochgezogene Wandungen (24) aufweisenden Federaufnahme (11) abstützenden Ventilfeder (12) von außen an einen am Rand (17) der Deckelöffnung (18) oder mittels eines in die Deckelöffnung (18) eingesetzten Dichtkörpers (9) gebildeten Dichtsitz (13) gedrückt wird, von welchem sich der Ventilkörper (4) bei Überschreiten eines vorgegebenen Topfinnendrucks zur Freigabe eines Dampfaustrittskanals (16) der Deckelöffnung (18) abhebt, dadurch gekennzeichnet, daß der Federteller (14) axial verschiebbar in der Federaufnahme (11) aufgenommen, an dessen Wandung (24) geführt und durch einen von der Wandung (24) radial einwärts ragenden Scheibenkörper (15) eingefangen ist.

2. Deckel nach Anspruch 1, wobei sich der Federteller (14) an dem Dichtkörper (9) abstützt, dadurch gekennzeichnet, daß der Dichtkörper (9) eine Zentrierungsstufe (27) für die Aufnahme einer konzentrischen Ausbuchtung (28) des Federtellers (14) aufweist.

3. Deckel nach Anspruch 1 oder 2, dadurch gekennzeichnet, daß der Ventilkörper (4) ein hülsenförmiges Gehäuse (30) aufweist und die Wandung des Gehäuses (30) an seinem aus der Deckelöffnung (18) herausragenden Ende nach radial außen zur Bildung einer DichtKante (19) umgebogen ist.

4. Deckel nach einem der Ansprüche 1 bis 3, dadurch gekennzeichnet, daß der Scheibenkörper (15) den inneren Teil des Dichtkörpers (9) in einer Mittelöffnung (26) umgibt.

5. Deckel nach Anspruch 4, dadurch gekennzeichnet, daß der Außendurchmesser des Federtellers (14) größer ist als der Durchmesser der Mittelöffnung (26) des Scheibenkörpers (15).

6. Deckel nach einem der Ansprüche 1 bis 5, wobei die Deckelöffnung (18) in einer Vertiefung (29) der Deckelwandung (18) vorgesehen ist, dadurch gekennzeichnet, daß der außerhalb der Deckelwandung (10) liegende Teil des Dichtkörpers (9) und des Ventilkörpers (4) in Verschlußstellung innerhalb der Vertiefung (29) liegt.

7. Deckel nach einem der Ansprüche 1 bis 6, wobei der Ventilkörper (4) an seinem äußeren Ende ein die Deckelöffnung (18), den ggf. vorgesehenen Dichtkörper (9) und die Dichtkante (19) des Ventilkörpers (4) radial überkragende Abdeckscheibe (5) trägt, dadurch gekennzeichnet, daß der Durchmesser der Abdeckscheibe (5) geringfügig kleiner als der Durchmesser der Vertiefung (29) der Deckelwandung (10) ist.

8. Deckel nach Anspruch 7, dadurch gekennzeichnet, daß die Oberseite der Abdeckscheibe (5) in Verschlußstellung des Ventilkörpers (4) im wesentlichen mit der angrenzenden Oberfläche der Deckelwandung (10) fluchtet.

9. Deckel nach Anspruch 7 oder 8, dadurch gekennzeichnet, daß die Abdeckscheibe (5) mit dem oberen umgebogenen Teil des Gehäuses (30) des Ventilkörpers (4) verschweißt ist.

10. Deckel nach einem der Ansprüche 1 bis 9, mit einem in dem Ventilkörper (4) geführten Anzeigestift (1), der durch den Topfinnendruck und in Abhängigkeit von der Größe des Topfinnendrucks aus einer Ruhelage gegen die Wirkung einer Anzeigefeder (3) zur Druckanzeige axial verlagert wird, dadurch gekennzeichnet, daß der Anzeigestift (1) in dem hülsenförmigen Gehäuse (30) des Ventilkörpers (4) geführt ist und daß auf dessen topfinnenseitiges durch eine Mittelöffnung (21) der Federaufnahme (11) hindurchragendes Ende eine Dichtungsmembran (6) aufgesteckt oder anfgeknöpft ist, an welcher sich der Anzeigestift (1) mit seinem topfinnenseitigen Ende (2) abstützt.

11. Deckel nach Anspruch 10, dadurch gekennzeichnet, daß der Anzeigestift (1) über den größten Teil seiner axialen Länge einen wesentlich geringeren Durchmesser als der Innendurchmesser des Gehäuses (30) des Ventilkörpers (4) hat und mittels eines radialen Flansches (31) an der Innenwandfläche des Gehäuses (30) axial geführt ist.

12. Deckel nach Anspruch 10 oder 11, dadurch gekennzeichnet, daß sich die Anzeigefeder (3) einerseits an dem radialen Flansch (31) des Anzeigestiftes (1) und andererseits an einem an dem Ventilkörper (4) gehaltenen, vorzugsweise ringförmigen, Führungskörper (7) abstützt.

13. Deckel nach Anspruch 12, dadurch gekennzeichnet, daß der Führungskörper (7) eine Ausnehmung (32) für die konzentrische Aufnahme wenigstens eines Teils der Anzeigefeder (3) aufweist.

14. Deckel nach Anspruch 12 oder 13, dadurch gekennzeichnet, daß der Führungskörper (7) sich an seinem äußeren Ende mit einer Stufe (33) an der Abdeckscheibe (5) abstützt, mit einem Vorsprung (34) in eine Mittelöffnung (35) der Abdeckscheibe (5) hineinragt und an seiner Oberseite mit der Außenfläche der Abdeckscheibe (5) im wesentlichen fluchtet.

15. Deckel nach einem der Ansprüche 12 bis 14, dadurch gekennzeichnet. daß die Oberseite des Anzeigestiftes (1) in dessen Ruhestellung mit der Oberseite des Führungskörpers (7) und der Außenfläche der Abdeckscheibe (5) im wesentlichen fluchtet.

16. Deckel nach einem der Ansprüche 12 bis 15, dadurch gekennzeichnet, daß der Führungskörper (7) einen oberen Anschlag für die axiale Bewegung des Anzeigestiftes (1) bildet.

17. Deckel nach einem der Ansprüche 10 bis 16, dadurch gekennzeichnet, daß eine Einziehung (36) des Gehäuses (30) einen unteren Anschlag für die axiale Bewegung des Anzeigestiftes (1) bildet.

18. Deckel nach einem der Ansprüche 10 bis 17, dadurch gekennzeichnet, daß der Anzeigestift (1) zweiteilig ausgebildet ist, wobei der untere Teil aus Metall, z. B. Aluminium, und der obere, die Druckanzeigemarkierungen tragende Teil aus Kunststoff besteht.

**Revendications**

1. Couvercle avec soupape de cuisson pour un autocuiseur, comprenant un corps de soupape (4) s'étendant à travers une ouverture (18) de décharge de pression dans la paroi (10) du couvercle et appuyé en position de fermeture, sous l'action d'un ressort de soupape (12) prenant appui, côté couvercle, sur une cuvette de ressort (14) et de l'autre côté sur une coupelle de ressort (11) reliée de façon amovible au corps de soupape (4) et présentant des parois (24) relevées à la manière d'un godet, de l'extérieur contre un siège d'étanchéité (13) formé sur le bord (17) de l'ouverture (18) du couvercle ou au moyen d'un corps d'étanchéité (9) rapporté dans l'ouverture (18) du couvercle, siège duquel le corps de soupape (4) se décolle, lorsque la pression à l'intérieur de l'autocuiseur dépasse une valeur prédéterminée, en vue de la libération d'un canal d'échappement de vapeur (16) de l'ouverture (18) du couvercle, caractérisé par le fait que la cuvette de ressort (14) est disposée de façon axialement déplaçable dans la coupelle de ressort (11), est guidée sur la paroi (24) de cette dernière et est retenue dans cette dernière par une rondelle (15) faisant saillie radialement vers l'intérieur depuis ladite paroi (24).

2. Couvercle suivant la revendication 1, dans lequel la cuvette de ressort (14) prend appui sur le corps d'étanchéité (9), caractérisé par le fait que le corps d'étanchéité (9) présente un gradin de centrage (24) recevant un bombement concentrique (28) de la cuvette de ressort (14).

3. Couvercle suivant la revendication 1 ou 2, caractérisé par le fait que le corps de soupape (4) présente une enveloppe (30) en forme de douille et la paroi de l'enveloppe (30) est pliée radialement vers l'extérieur à son extrémité faisant saillie hors de l'ouverture (18) du couvercle, en vue de la formation d'une arête d'étanchéité (19).

4. Couvercle suivant l'une des revendications 1 à 3, caractérisé par le fait que la rondelle (15) entoure la partie intérieure du corps d'étanchéité (9) par une ouverture centrale (26).

5. Couvercle suivant la revendication 4, caractérisé par le fait que le diamètre extérieur de la cuvette de ressort (14) est plus grand que le diamètre de l'ouverture centrale (26) de la rondelle (15).

6. Couvercle suivant l'une des revendications 1 à 5, dans lequel l'ouverture (18) du couvercle est prévue dans un creux (29) de la paroi (10) du couvercle, caractérisé par le fait que la partie du corps d'étanchéité (9) et du corps de soupape (4) se trouvant à l'extérieur de la paroi (10) du couvercle est située en position de fermeture à l'intérieur du creux (29).

7. Couvercle suivant l'une des revendications 1 à 6, dans lequel le corps de soupape (4) porte à son extrémité extérieure une rondelle de recouvrement (5) s'étendant radialement par-dessus l'ouverture (18) du couvercle, le corps d'étanchéité (9) éventuellement prévu et l'arête d'étanchéité (19), caractérisé par le fait que le diamètre de la rondelle de recouvrement (5) est légèrement inférieur au diamètre du creux (29) de la paroi (10) du couvercle.

8. Couvercle suivant la revendication 7, caractérisé par le fait que le côté supérieur de la rondelle de recouvrement (5) se trouve, en position de fermeture du corps de soupape (4), essentiellement de niveau avec la surface contiguë de la paroi (10) du couvercle.

9. Couvercle suivant la revendication 7 ou 8, caractérisé par le fait que la rondelle de recouvrement (5) est soudée à la partie supérieure pliée de l'enveloppe (30) du corps de soupape (4).

10. Couvercle suivant l'une des revendications 1 à 9, avec une tige indicatrice (1) guidée dans le corps de soupape (4) et déplacée axialement, par la pression intérieure de l'autocuiseur et en fonction de la valeur de la pression intérieure de l'autocuiseur, à partir d'une position de repos à l'encontre de l'action d'un ressort indicateur (3), en vue de l'indication de pression, caractérisé par le fait que la tige indicatrice (1) est guidée dans l'enveloppe (30) en forme de douille du corps de soupape (4) et que sur l'extrémité de cette enveloppe, tournée vers le côté intérieur de l'autocuiseur et traversant une ouverture centrale (21) de la coupelle de ressort (11), est emmanchée ou encliquetée une membrane d'étanchéité (6) contre laquelle la tige indicatrice (1) prend appui par son extrémité (2) côté intérieur de l'autocuiseur.

11. Couvercle suivant la revendication 10, caractérisé par le fait que la tige indicatrice (1) présente, sur la majeure partie de sa longueur axiale, un diamètre sensiblement plus faible que le diamètre intérieur de l'enveloppe (30) du corps de soupape (4) et comporte un rebord radial (31) guidé axialement sur la surface intérieure de la paroi de l'enveloppe (30).

12. Couvercle suivant la revendication 10 ou 11, caractérisé par le fait que le ressort indicateur (3) prend appui d'un côté sur le rebord radial (31) de la tige indicatrice (1) et de l'autre côté sur un corps de guidage (7), de préférence annulaire, fixé au corps de soupape (4).

13. Couvercle suivant la revendication 12, caractérisé par le fait que le corps de guidage (7) présente un évidemment (32) pour recevoir de façon concentrique au moins une partie du ressort indicateur (3).

14. Couvercle suivant la revendication 12 ou 13, caractérisé par le fait que le corps de guidage (7) prend appui à son extrémité extérieure par un gradin (33) sur la rondelle de recouvrement (5), comporte une saillie (34) pénétrant dans une ouverture centrale (35) de la rondelle de recouvrement (5) et se trouve, par son côté supérieure, sensiblement de niveau avec la surface extérieure de la rondelle de recouvrement (5).

15. Couvercle suivant l'une des revendications 12 à 14, caractérisé par le fait que le côté supérieur de la tige indicatrice (1) se trouve, en position de repos, sensiblement de niveau avec le côté supérieur du corps de guidage (7) et avec la surface extérieure de la rondelle de recouvrement (5).

16. Couvercle suivant l'une des revendications 12 à 15, caractérisé par le fait que le corps de guidage (7) forme une butée supérieure pour le mouvement axial de la tige indicatrice (1).

17. Couvercle suivant l'une des revendications 10 à 16, caractérisé par le fait qu'un rétreint (36) de l'enveloppe (30) forme une butée inférieure pour le mouvement axial de la tige indicatrice (1).

18. Couvercle suivant l'une des revendications 10 à 17, caractérisé par le fait que la tige indicatrice (1) est réalisée en deux parties, la partie inférieure étant en métal, par exemple en aluminium, et la partie supérieure portant des marques d'indication de pression étant en matière plastique.

## Claims

1. Lid with a safety valve for a pressure cooker, the lid having a valve body (4) extending through an aperture (18) in the lid wall (10), this aperture (18) serving for the pressure relief, which valve body (4), in the closed position, is pressed under the action of a valve spring (12) supported, on the lid side, against a plate spring (14) and, on the other hand, supported against a spring receiver (11) detachably connected to the valve body (4) and having walls (24) which are raised up in a cup shape, this valve body (4) being pressed from the outside against a sealing seat (13) which is at the edge (17) of the lid aperture (18) or which is formed by means of a sealing body (9) inserted in the lid aperture (18), above which sealing seat (13) the valve body (4) is raised, when a pre-selected pressure inside the cooker is exceeded, for releasing a steam outlet channel (16) in the lid aperture (18), characterised in that the plate spring (14) is received in the spring receiver (11) in axially displaceable manner, is guided against the wall (24) of the said spring receiver (11), and is captured by a flange body (15) which projects radially inwards from the wall (24).

2. Lid according to claim 1, in which the plate spring (14) is supported against the sealing body (9), characterised in that the sealing body (9) has a centering step (27) for receiving a concentric bulge (28) in the plate spring (14).

3. Lid according to claim 1 or 2, characterised in that the valve body (4) has a tube-shaped housing (30), and the wall of the housing (30) is bent radially outwards at the end thereof which projects out of the lid aperture (18), to form a sealing edge (19).

4. Lid according to one of claims 1 to 3, characterised in that the flange body (15) surrounds the inner part of the sealing body (9) in a central aperture (26).

5. Lid according to claim 4, characterised in that the outer diameter of the plate spring (14) is greater than the diameter of the central aperture (26) of the flange body (15).

6. Lid according to one of claims 1 to 5, in which the lid aperture (18) is provided in a depression (29) in the lid wall (10), characterised in that, in the sealing position, the part of the sealing body (9) and the valve body (4) lying outside the lid wall (10) lies within the depression (29).

7. Lid according to one of claims 1 to 6, in which the valve body (4) supports at its outer end a covering flange (5) which projects radially beyond the lid aperture (18), the sealing body (9) if provided, and the sealing edge (19) of the valve body (4), characterised in that the diameter of the covering flange (5) is negligibly less than the diameter of the depression (29) in the lid wall (10).

8. Lid according to claim 7, characterised in that, in the sealing position of the valve body (4), the upper side of the covering flange (5) is substantially flush with the adjacent surface of the lid wall (10).

9. Lid according to claim 7 or 8, characterised in that the covering flange (5) is welded to the upper, bent-over part of the housing (30) of the valve body (4).

10. Lid according to one of claims 1 to 9, having an indicator pin (1) guided within the valve body (4), which indicator pin (1) is displaced axially, from a resting position, by the pressure within the cooker and in dependence upon the amount of pressure within the cooker, against the action of an indicator spring (3), for the indication of pressure, characterised in that the indicator pin (1) is guided within the tube-shaped housing (30) of the valve body (4), and in that there is placed or studded on the end of the valve body (4) which is on the inside of the pressure cooker and projects through a central aperture (21) of the spring receiver (11), a sealing diaphragm (6) upon which the indicator pin (1) is supported by the end (2) thereof which is on the inside of the pressure cooker.

11. Lid according to claim 10, characterised in that the indicator pin (1) has, over the greatest part of its axial length, a substantially smaller diameter than the internal diameter of the housing (30) of the valve body (4), and is guided axially by means of a radial flange (31) against the surface of the inner wall of the housing (30).

12. Lid according to claim 10 or 11, characterised in that the indicator spring (3) is supported on the one hand against the radial flange (31) of the indicator pin (1) and, on the other hand, against a preferably annular guide body (7) which is held against the valve body (4).

13. Lid according to claim 12, characterised in that the guide body (7) has a recess (32) for receiving concentrically at least a part of the indicator spring (3).

14. Lid according to claim 12 or 13, characterised in that the guide body (7) is supported at its outer end on the covering flange (5) by a step (33), projects inwards by a projection (34) into a central aperture (35) of the covering flange (5) and, on its upper side, is substantially flush with the outer surface of the covering flange (5).

15. Lid according to one of claims 12 to 14, characterised in that the upper side of the indicator pin (1) is, in the resting position thereof, substantially flush with the upper side of the guide body (7) and the outer surface of the covering flange (5).

16. Lid according to one of claims 12 to 15, characterised in that the guide body (7) forms an upper limit stop for the axial movement of the indicator pin (1).

17. Lid according to one of claims 10 to 16, characterised in that a tapering (36) of the housing (30) forms a lower limit stop for the axial movement of the indicator pin (1).

18. Lit according to one of claims 10 to 17, characterised in that the indicator pin (1) is formed in two parts, the lower part consisting of metal, for example aluminium, and the upper part, which carries the pressure indication markings, consisting of plastics.